# EUROPEAN PATENT SPECIFICATION

(11) **EP 3 040 668 B1**
(45) Date of publication and mention of the grant of the patent: **21.08.2019**
(21) Application number: 14200742.6
(22) Date of filing: 31.12.2014
(51) Int. Cl.: F28D 7/16, F24F 12/00, F28D 21/00, F28F 27/02

(54) **HEAT EXCHANGER FOR A VENTILATION SYSTEM**
WÄRMEAUSTAUSCHER FÜR EIN LÜFTUNGSSYSTEM
ÉCHANGEUR DE CHALEUR POUR UN SYSTÈME DE VENTILATION

(43) Date of publication of application: 06.07.2016
(73) Proprietor: Brink Climate Systems B.V., 7951 SN Staphorst (NL)
(72) Inventor: Strijdveen, Gerardus Wilhelmus Johannes, 7412 BG Deventer (NL); Brand, Rolf, 7948 CE Nijeveen (NL)
(74) Representative: Nederlandsch Octrooibureau

(56) References cited:
- EP-A1- 2 762 695
- WO-A1-91/08425
- SU-A1- 681 315
- US-A1- 2011 131 961
- US-A1- 2014 076 292
- US-A1- 2014 208 725

## Description

### Background

The present invention relates to a heat exchanger for a forced ventilation system for introducing a fresh air flow from outside into an interior and exhaust an outgoing flow from the interior to the outside, the heat exchanger being a shell and tube type heat exchanger for exchanging heat between the fresh air flow and the outgoing flow.

Such a heat exchanger is known from DE102008058817, which can be considered as the closest prior art, wherein an air-to-air heat exchanger for ventilation systems is disclosed, having two guided in counter-current air paths and an opposite air currents conveyed fan, wherein the air path are arranged in a closed cylindrical housing, inside which the first air path extends within closed channel, while the second air path is arranged in the intermediate space between the closed channels and the cylindrical housing, and that the fan is arranged at one end of the cylindrical housing.

In general such a shell and tube type air-to-air heat exchanger carries two airflows running in counter flow. The airflows are divided from each other with the use of straws, also referred to as tubes. The straws are placed inside a shell. One airflow flows inside the straws, where the other flow will flow around the straws. In order to run in counter flow, the one flow will enter the heat exchanger on one side of the heat exchanger and will flow straight to the opposite side of the heat exchanger, whereas the second flow will enter the heat exchanger at the opposite side of the heat exchanger and leave at the one side of the heat exchanger.

In practice the need for exchanging heat between the fresh air flow and the outgoing flow varies with the season of the year. Known shell and tube type air-to-air heat exchangers however do exchange heat in a predetermined extent.

### Summary of the invention

The invention aims to provide a heat exchanger for a forced ventilation system, wherein extent of heat exchange can be adjusted.

Another object of the invention is to improve a known heat exchanger for a forced ventilation system in that a problem associated with the heat exchanger is at least partially solved.

Yet another object of the invention is to provide an alternative heat exchanger for a forced ventilation system.

According to the invention this is realized with a heat exchanger for a forced ventilation system according to claim 1.

The bypass tube being adjustable to position selectively allow flow from the interspace through the at least one bypass flow-through opening to the outside provides the possibility to adjust the overlap between the first air flow and the second air flow and therefore the extent of heat exchange between the fresh air flow and the outgoing flow. In other words the position of the at least one bypass flow-through opening is adaptable with respect to the interspace so that the overlap between the first air flow and the second air flow can be set as desired.

The at least one bypass flow-through opening being in fluid connection with the interspace allow to suck the outgoing flow through the interspace. Sucking the outgoing flow out of the interspace enables a better distribution of the outgoing flow in the interspace.

Depending on the orientation in which the heat exchanger is installed in a wall, the at least one bypass flow-through opening is either an inlet or a discharge. Likewise, the interspace flow-through opening is either an inlet or a discharge.

The first air flow through the number of tubes can be a fresh air flow from outside into an interior or alternatively an outgoing flow from the interior to the outside. The first air flow being the fresh air flow is preferable since the fresh air flow is less likely to condensate. The second air flow through the interspace can be the fresh air flow from outside into the interior or alternatively the outgoing flow from the interior to the outside. In any case, one of the first and second air flow is the fresh air flow, and the other one of the first and second air flow is the outgoing air flow.

In an embodiment of the invention, the at least one bypass flow-through opening is position adjustable along a longitudinal axis of the bypass tube for influencing the degree of heat exchange between the fresh air flow and the outgoing flow. The at least one bypass flow-through opening being position adjustable along a longitudinal axis of the bypass tube provides easy control of the position where for example the outgoing flow leaves the interspace and enters the bypass tube.

In an embodiment of the invention, the at least one bypass flow-through opening is size adjustable for influencing the degree of heat exchange between the fresh air flow and the outgoing flow. The at least one bypass inlet being size adjustable provides control of the position where the outgoing flow leaves the interspace and enters the bypass tube. It is noted that adjusting the size of the bypass inlet is less favourable over adjusting the position because adjusting the size varies the flow restriction of the heat exchanger as a whole which is undesirable.

In an embodiment of the invention, the bypass tube comprises a number of bypass flow-through openings spaced along the longitudinal axis of the bypass tube. The bypass tube comprising a number of bypass flow-through openings allows to switch between individual bypass flow-through openings which potentially provides a fast control of the extent of heat exchange.

The heat exchanger of the invention comprises a valve system operationally coupled with the least one bypass flow-through opening of the number of bypass flow-through openings to at least partially open or close the at least one bypass flow-through opening for influencing the degree of heat exchange between the first air flow and the second air flow.

In an embodiment of the invention, the bypass tube comprises an open end for passing the second air flow, wherein the at least one bypass flow-through opening is arranged between the interspace flow-through opening and the open end of the bypass tube.

The interspace flow-through opening is arranged at one side of the heat exchanger and the open end of the bypass tube is arranged at the opposite side of the heat exchanger. The second air flow flows between the interspace flow-through opening and the open end of the bypass tube via the at least one bypass flow-through opening. Depending on the installation and orientation of the heat exchanger, the open end of the bypass tube functions either as a discharge or an inlet. Between is to be understood here in relation to the flow direction.

In an embodiment of the invention, wherein the interspace is closed off at both opposite sides of the heat exchanger such that the entire second air flow flows between the at least one bypass flow-through opening and the interspace flow-through opening. The interspace being closed e.g. downstream ensures that the entire second, for example outgoing, flow leaves the heat exchanger through the bypass tube. This even more improves the adjustability of the degree of heat exchange between the fresh air flow and the outgoing flow.

In an embodiment of the invention, the interspace flow-through opening is arranged at the outer periphery of the heat exchanger, preferably arranged in the outer shell. The interspace flow-through opening being arranged at the outer periphery of the heat exchanger allows to maximize the flow-through opening surface of the interspace flow-through opening which lowers the flow restriction of the heat exchanger as a whole. In addition, this allows an efficient use of the entire volume of the heat exchanger because of an efficient distribution of the second air flow.

In an embodiment of the invention, the bypass tube is arranged within the outer shell, preferably centrally arranged within the outer shell. The bypass tube being centrally arranged within the outer shell allows to use all the volume of the heat exchanger in an even manner. The volume of the heat exchanger refers to the volume within the shell where the number of tubes and the innerspace engage. The bypass tube being centrally arranged within the outer shell allows to such air from centrally within the interspace. The second air flow therefore engages all of the number of tubes and the application of the usual baffles can be dispensed with.

In an embodiment the heat exchanger, comprises a mounting member for arranging at least one tube of the number of tubes within the outer shell, wherein the at least one tube is in press-fit connection with the mounting member to ensure an airtight coupling between the mounting member and the at least one tube. The at least one tube being in press-fit connection with the mounting member facilitates the manufacture of the heat exchanger. Preferably, all of the number of tubes will be in press-fit connection with the mounting member. In contrast, known shell and tube type air-to-air heat exchangers glue tubes to mounting members which is a cumbersome process.

In an embodiment, the at least one tube is coupled to the mounting member through a sealing means. In addition to the press-fit connection, this even more ensures an airtight coupling between the mounting member and the at least one tube.

In an embodiment of the heat exchanger;
- the first air flow is a fresh air flow from outside into the interior,
- the second air flow is an outgoing flow from the interior to the outside,
- the interspace flow-through opening is an interspace inlet for receiving the outgoing flow from the interior into the interspace such that the interspace carries the outgoing flow from the interior to the outside along the number of tubes such that heat is exchanged between the fresh air flow through the number of tubes and the outgoing flow in the interspace, and
- the at least one bypass flow-through opening being at least one bypass inlet in fluid connection with the interspace, the bypass tube being adjustable to position selectively allow flow from the interspace through the at least one bypass inlet to the outside.

The invention further relates to a forced ventilation system comprising a heat exchanger according to the invention. Forced ventilation implies a driving force that generates the fresh air flow and the outgoing flow. The driving force is usually a fan.

In an embodiment, the forced ventilation system comprises an axial fan member for generating the fresh air flow from outside into the interior and the outgoing flow from the interior to the outside. Axial fan member means that the fan member generates a flow with runs axial with respect to an axis of rotation of the fan member. This allows for a compact construction of the forced ventilation system.

The invention further relates to a use of a heat exchanger according to the invention in a forced ventilation system.

### Description of the drawings

The invention will be further elucidated referring to an preferred embodiment shown in the drawing wherein shown in:
Fig. 1 a schematic side view of a heat exchanger according to the invention,
fig. 2 a heat exchanger according to fig. 1 with a different flow path selected,
fig. 3. a side view of a heat exchanger according to the invention,
fig. 4 a top view of the heat exchanger according to fig. 3,
fig. 5 a cross sectional side view of the heat exchanger according to fig. 3,
fig. 6 a cross sectional side view of the heat exchanger according to fig. 3,
fig. 7a, 7b show a different way of installation of the heat exchanger of fig. 1-6,
fig. 8a, 8b shows a further way of installation of the heat exchanger of fig. 1-6, and
fig. 9a, 9b shows an even further way of installation of the heat exchanger of fig. 1-6.

### Detailed description of embodiments

In the figures a heat exchanger 1 for a ventilation system is shown. Such a ventilation system is suitable for introducing a fresh air flow 2 from outside into an interior and exhaust an outgoing flow 3 from the interior to the outside. Such a ventilation system is usually integrated in a wall 17 wherein a through hole is made.

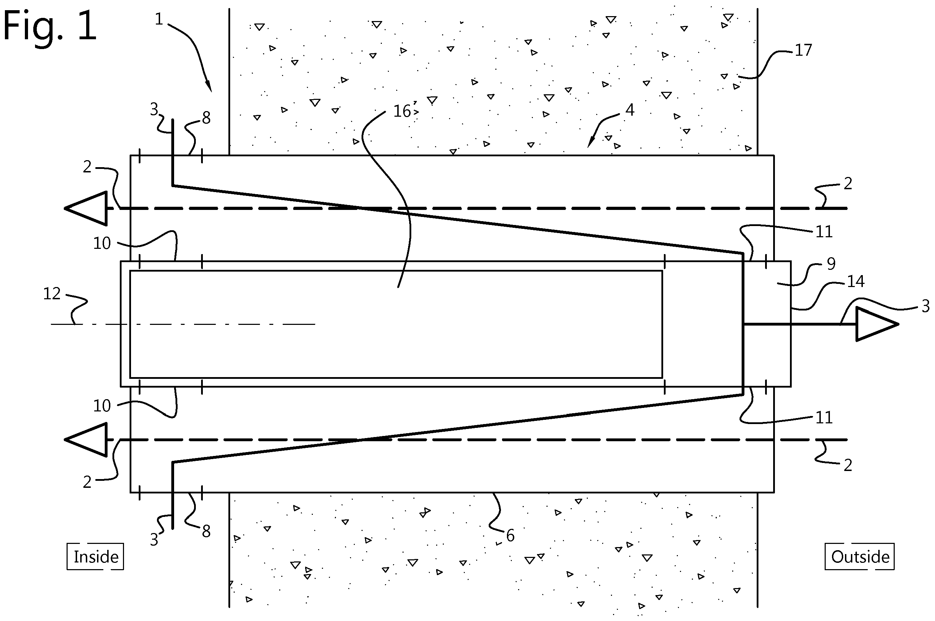

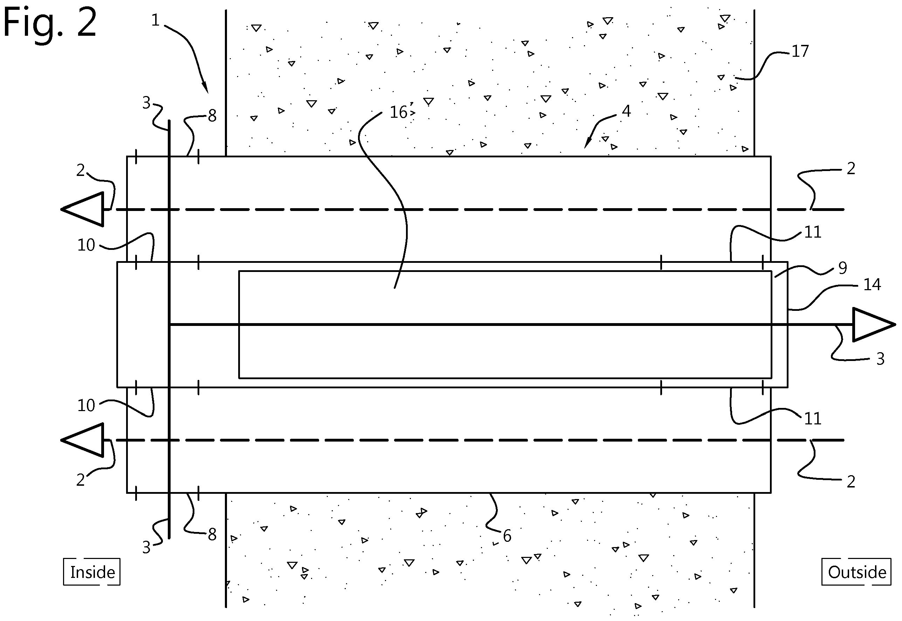

In fig. 1-6 the orientation and installation of the heat exchanger 1 in the wall is such that interspace flow-through opening 8 is arranged in the inside and functions as an interspace inlet for receiving the outgoing flow 3 from the interior or also inside into the interspace 7. Both bypass flow-through openings 10, 11 function as an inlet depending on the position (fig. 1, fig. 2) of the hollow tube member 16 of the valve system 13. The open end of the bypass tube 9 functions as a discharge opening 14 for discharging the outgoing flow 3 to the outside. The fresh air flow 2 flows through the number of tubes 5 from the outside to the inside. The outgoing air flow 3 flows through the interspace 7.

The fresh air flow 2 from outside into an interior is shown as a dashed line. The outgoing flow 3 from the interior to the outside is shown as a continuous line.

The ventilation system 1 comprises a shell and tube type heat exchanger 4. The heat exchanger 4 is suitable for exchanging heat between the fresh air flow 2 and the outgoing flow 3. The invention will be described referring to the heat exchanger 4 whereas other parts like a motorized axial fan, filters etc. are not shown and not described.

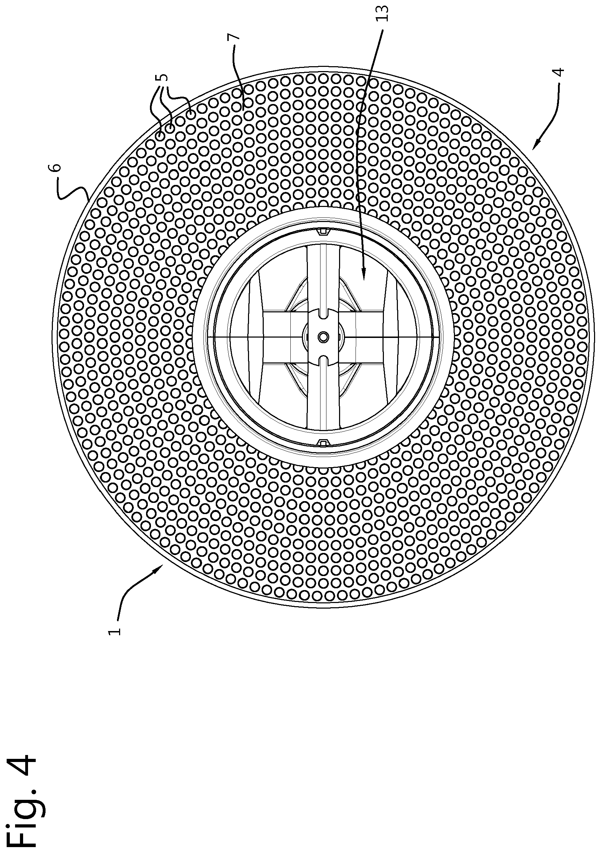

The heat exchanger 4 comprises a number of tubes 5. The number of tubes 5 operate in parallel and introduce the fresh air flow 2 from outside into the interior. The number of tubes 5 are not shown in the schematic figures 1 and 2. The tubes 5 do have cylindrical shape as can be seen in fig. 4. Other cross sectional shapes than a circle may be conceivable like a square or a polygon. An outer diameter of a tube 5 is typically about 3.2 mm. The wall thickness of a tube 5 is typically about 0.15 mm. Adjacent tubes 5 are arrange at a pitch of about 4.2 mm. Pitch is the centre to centre distance. Other suitable outer diameters and wall thickness of the tubes 5 are conceivable.

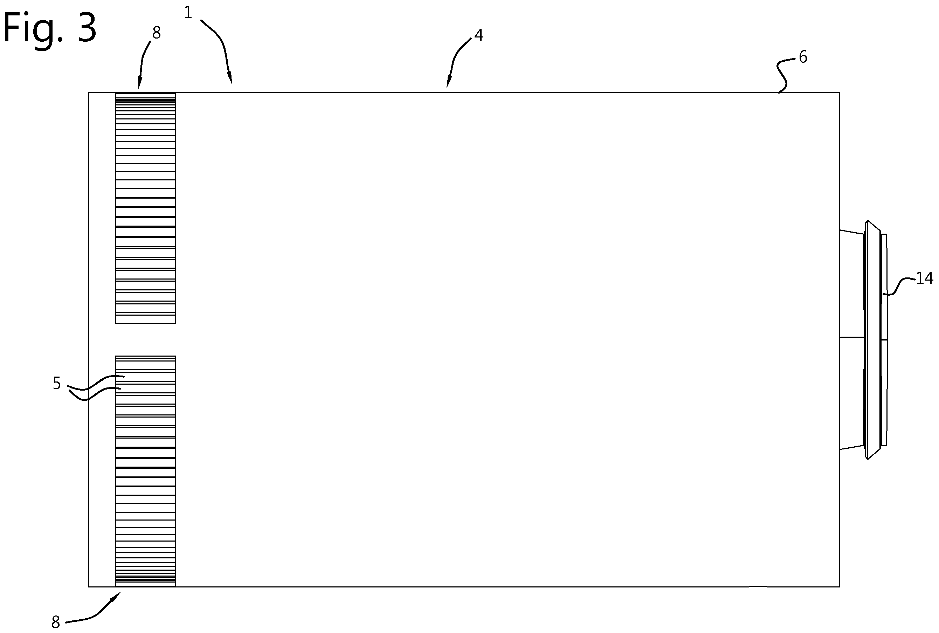

The heat exchanger 4 comprises an outer shell 6. The outer shell 6 is configured to channel the outgoing flow 3 from the interior to the outside. Therefore, the outer shell 6 encloses all of the number of tubes 5 and defines an interspace 7 within said outer shell 6 and outside of the number of tubes 5. As can be seen in fig. 3 and 4 the outer shell 6 has a cylindrical shape. A different shape for the cylindrical shell is conceivable. The outer diameter of the outer shell is for example 180 mm. It will be clear that the outer diameter of the heat exchanger 1 can be adapted to the present hole in a wall 17 and may vary with the required ventilation capacity. The length of the heat exchanger 1 is about 270 mm, as shown in fig. 3. It will be clear that the length of the heat exchanger 1 can be adapted to the present thickness of the wall 17.

The heat exchanger 4 comprises an interspace inlet 8. The interspace inlet 8 is suitable for receiving the outgoing flow 3 from the interior into the interspace 7. The interspace 7 carries the outgoing flow 3 from the interior to the outside along the number of tubes 5. The outgoing flow 3 is carried along the number of tubes 5 such that heat is exchanged between the fresh air flow 2 through the number of tubes 5 and the outgoing flow 3 in the interspace 7. In fig. 1 the fresh air flow 2 and the outgoing flow 3 are in counter flow, that is they flow in a substantially opposite direction. The fresh air flow 2 and the outgoing flow 3 extend in parallel with respect to the longitudinal axis 12.

The heat exchanger 4 comprises a bypass tube 9. The bypass tube 9 is in fluid connection with the interspace 7. The bypass tube 9 is arrange such that it can bypass all or a portion of the outgoing flow 3. The thus bypassed portion of or all of the outgoing flow 3 is no more carried along the number of tubes 5 such that less or hardly any heat is exchanged between the fresh air flow 2 through the number of tubes 5 and the outgoing flow 3. In order to bypass all or a portion of the outgoing flow 3, the bypass tube 9 has at least one bypass inlet 10, 11. The at least one bypass inlet 10, 11 is in fluid connection with the interspace 7 to receive all or a portion of the outgoing flow 3.

The bypass tube 9 has a cylindrical shape as shown in fig. 4-6. Other shapes for the bypass tube are conceivable. The outer diameter of the bypass tube 9 is for example 80 mm, as shown in fig. 4. In combination with the outer diameter of the outer shell 6 being 180 mm, the shell 6 will enclose about 1063 tubes 5. It will be clear that the number of tubes 5 varies with the actual diameter of the heat exchanger 1.

In this case, the bypass tube 9 is adjustable to position selectively allow flow from the interspace 7 through the at least one bypass inlet into the bypass tube 9 to the outside. The bypass tube 9 being adjustable to position selectively allow flow means that one can select a position from where the outgoing flow 3 leaves the interspace 7 and enters the bypass tube 9. This way the degree of overlap between, and thus the degree of heat exchange between the fresh air flow 2 and the outgoing flow 3 can be adjusted as desired.

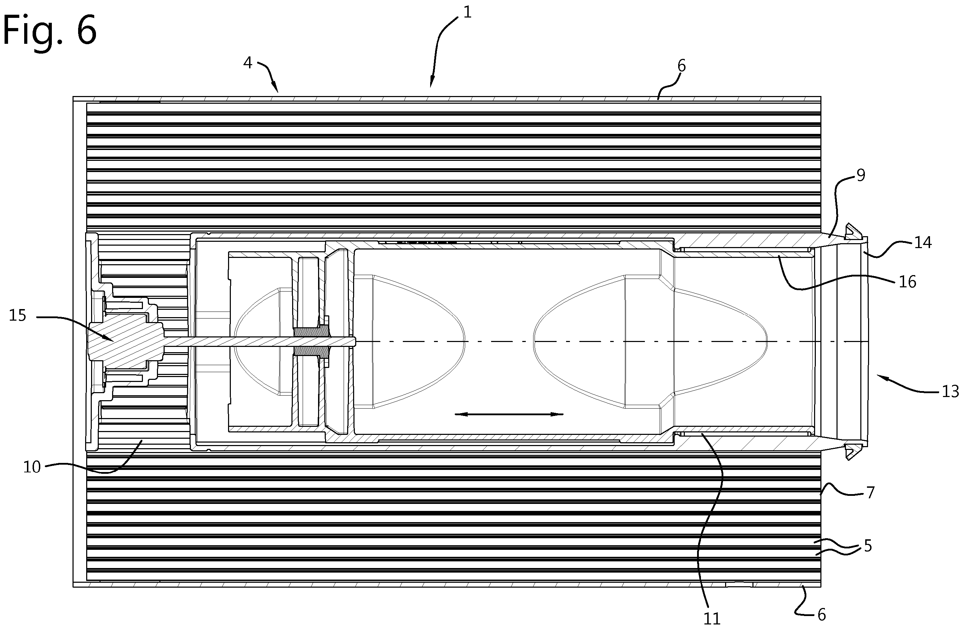

Here, the bypass tube comprises a number of bypass inlets, in this case two bypass inlets 10, 11. The two bypass inlets 10, 11 are spaced along the longitudinal axis 12 of the bypass tube 9. Referring to the outgoing flow 3, the bypass inlet 10 is arranged upstream and the bypass inlet 11 is arranged downstream. As shown in fig. 1 and fig. 6, .

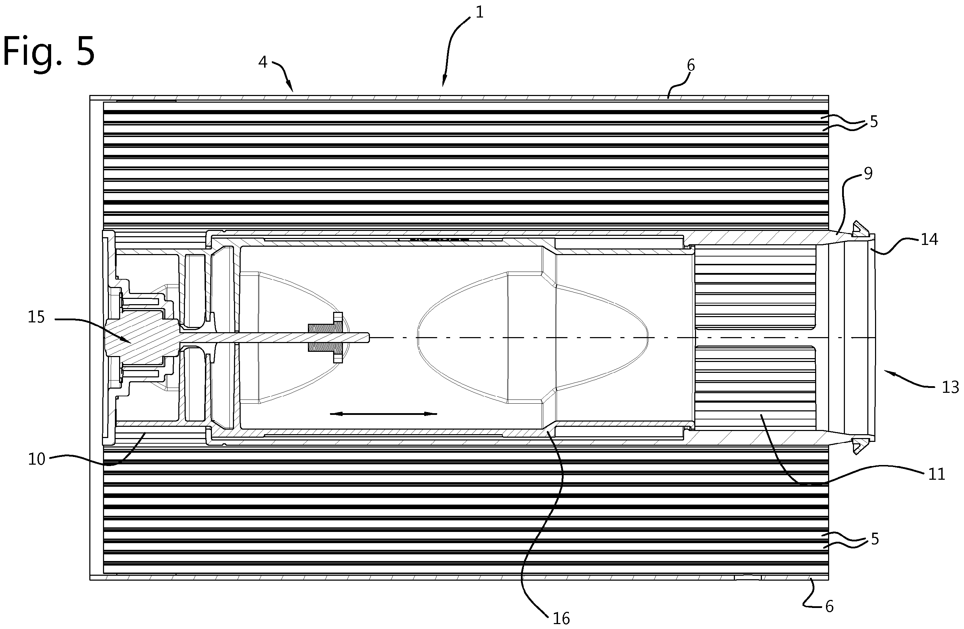

Here, the bypass tube 9 is adjustable through a valve system 13, as best seen in fig. 5 and 6. with both the upstream bypass inlet 10 and the downstream bypass inlet 11. The valve system 13 is operationally coupled with these inlets 10, 11 to at least partially open or close these inlets 10, 11 for influencing the degree of heat exchange between the fresh air flow and the outgoing flow. The valve system 13 comprises a hollow tube member 16. The hollow tube member 16 is arranged within the bypass tube 9. The hollow tube member 16 is arranged within the bypass tube 9 in a sliding member. The hollow tube member 16 is moveable between an upstream (fig. 5) and a downstream (fig. 6) position referring to the outgoing flow 3. The valve system 13 comprises a drive system 15 coupled with the hollow tube member 16 to move the hollow tube member between the upstream and downstream position. The drive system 15 comprises a linear actuator. The drive system 15 is arranged at one side of the bypass tube 9 such that the drive system 15 does not interfere with the outgoing flow 3. When the hollow tube member 16 is in the downstream position as shown in fig. 6, the downstream bypass inlet 11 is closed off and the upstream bypass inlet 10 is opened to allow the outgoing flow 3 to pass the heat exchanger through the bypass tube 9 as schematically shown in fig. 2. When the hollow tube member 16 is in the downstream position, the degree of heat exchange between the fresh air flow 2 and the outgoing flow 3 is minimal.

When the hollow tube member 16 is in the upstream position as shown in fig. 5, the upstream bypass inlet 10 is closed off and the downstream bypass inlet 11 is opened to allow the outgoing flow 3 to pass the heat exchanger through the bypass tube 9 as schematically shown in fig. 1. When the hollow tube member 16 is in the upstream position, the degree of heat exchange between the fresh air flow 2 and the outgoing flow 3 is maximal.

Here, the length of the hollow tube member 16 is about the length of the bypass tube 9 minus the length of one bypass inlet 10, 11. Length is measured in the direction of the longitudinal axis 12 of the bypass tube 9.

The bypass tube 9 comprises an open end 14 for discharging the outgoing flow 3 to the outside. Both the downstream bypass inlet 11 and the upstream bypass inlet 10 are arranged between the interspace inlet 8 and the open end 14 of the bypass tube 9. Between has to be understood such that, referring to the outgoing flow 3, both the downstream bypass inlet 11 and the upstream bypass inlet 10 are arranged downstream with respect to the interspace inlet 8 and upstream with respect to the open end 14.

In this case, the interspace 7 is closed downstream such that the entire outgoing flow 3 discharges through the open end 14 of the bypass tube 9.

As can be best seen in fig. 3, the interspace inlet 8 is arranged at the outer periphery of the heat exchanger 1. More specifically, the interspace inlet 8 us arranged in the outer shell 6. The interspace inlet 8 extends along substantially the entire circumference of the outer shell 6 around a central longitudinal axis of the heat exchanger 1.

As can be best seen in fig. 4, a mounting member is provided for arranging the number of tubes 5 within the outer shell 6. The tubes 5 are in press-fit connection with the mounting member to ensure an airtight coupling between the mounting member and the tubes. The mounting member also closes off the interspace 7 at one side of the heat exchanger 1. Although shown for one side of the heat exchanger 1, it will be clear that this is equally possible for the opposite side of the heat exchanger 1.

As is clear from fig. 4-6, the bypass tube 9 is arranged within the outer shell 6. More specifically, the bypass tube 9 is centrally arranged within the outer shell 6 such that the longitudinal axis 12 of the bypass tube 9 coincides with the central longitudinal axis of the heat exchanger 1.

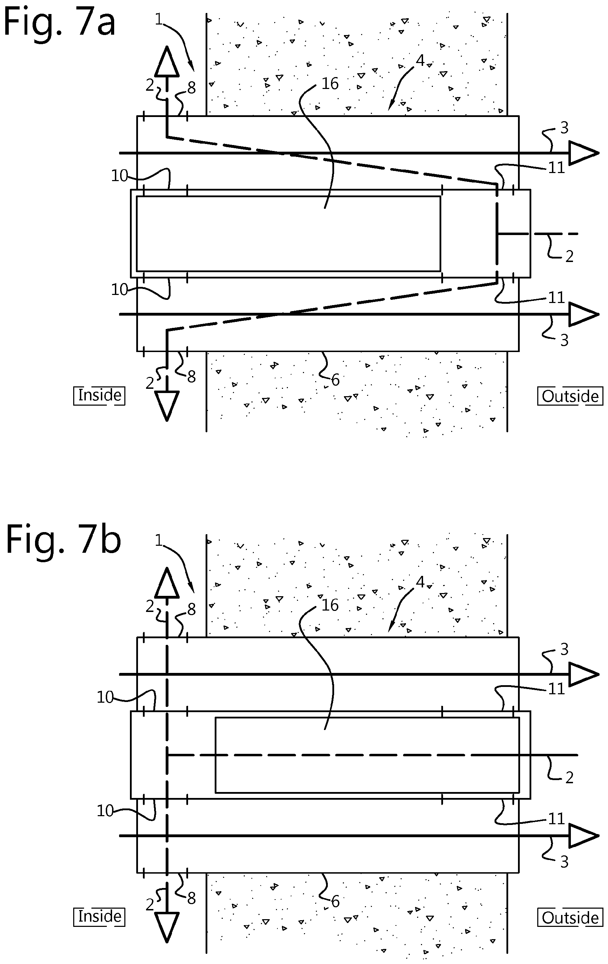

In fig. 7a, 7b a different way of installation of the heat exchanger 1 in a wall 17 is shown. The orientation and installation of the heat exchanger 1 in the wall 17 is such that interspace flow-through opening 8 is arranged in the inside. However, the flow-through opening 8 functions as an interspace outlet for introducing fresh air into the interior. Both bypass flow-through openings 10, 11 function as an outlet depending on the position (fig. 7a, 7b) of the hollow tube member 16 of the valve system 13. The open end of the bypass tube 9 functions as an inlet 14 for taking in the fresh air flow from the outside. The outgoing air flow 3 flows through the number of tubes 5 from the inside to the outside. The fresh air flow 2 flows through the interspace 7.

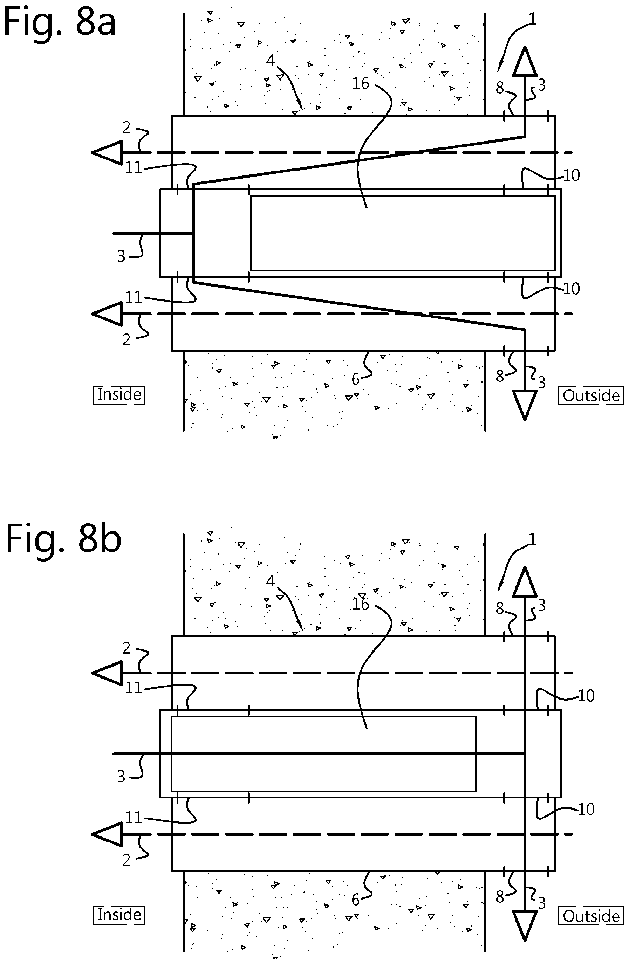

In fig. 8a, 8b a further way of installation of the heat exchanger 1 in a wall 17 is shown. The orientation and installation of the heat exchanger 1 in the wall is such that interspace flow-through opening 8 is arranged in the outside and functions as an interspace outlet for pouring out the outgoing flow 3 from the interior tot the outside. Both bypass flow-through openings 10, 11 function as an outlet depending on the position (fig. 8a, 8b) of the hollow tube member 16 of the valve system 13. The open end of the bypass tube 9 functions as an inlet 14 for taking in the outgoing flow 3. The fresh air flow 2 flows through the number of tubes 5 from the outside to the inside. The outgoing air flow 3 flows through the interspace 7.

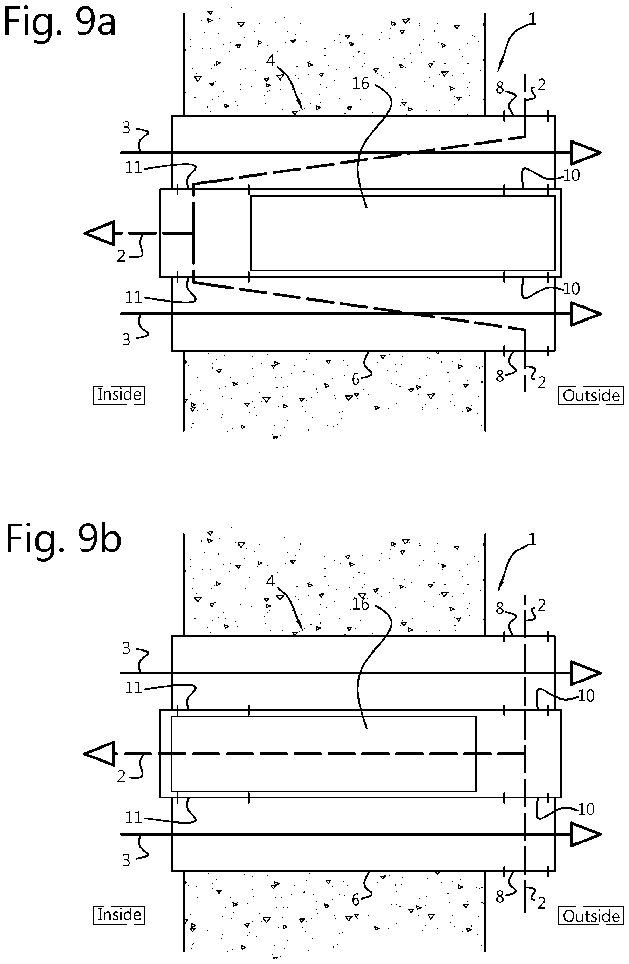

In fig. 9a, 9b an even further way of installation of the heat exchanger 1 in the wall 17 is shown. The orientation and installation of the heat exchanger 1 in the wall is such that the interspace flow-through opening 8 is arranged in the outside and functions as an interspace inlet for receiving the fresh air flow 2 from the outside into the interspace 7. Both bypass flow-through openings 10, 11 function as an inlet depending on the position (fog. 9a, 9b) of the hollow tube member 16 of the valve system 13. The open end of the bypass tube 9 functions as a discharge opening 14 for discharging the fresh air flow 2 into the inside. The fresh air flow 2 flows through interspace 7 from the outside to the inside. The outgoing air flow 3 flows through the number of tubes 5.

## Claims

1. Heat exchanger for a forced ventilation system (1) for introducing fresh air from outside into an interior, the heat exchanger being a shell and tube type heat exchanger (4) for exchanging heat between a first air flow and a second air flow, wherein the heat exchanger comprises;
- a number of tubes (5) for channelling the first air flow,
- an outer shell (6) configured to channel the second air flow, the outer shell enclosing the number of tubes and defining an interspace (7) within said outer shell and outside of the number of tubes,
- an interspace flow-through opening (8) for the second air flow such that the interspace carries the second air flow along the number of tubes such that heat is exchanged between the first flow through the number of tubes and the second air flow in the interspace, **characterised by**
- a bypass tube (9) having at least one bypass flow-through opening (10, 11) in fluid connection with the interspace, the bypass tube being adjustable to position selectively allow flow through the at least one bypass flow-through opening, and
- a valve system (13) operationally coupled with the least one bypass flow-through opening (10, 11) to at least partially open or close the at least one bypass flow-through opening depending on the position (fig. 1, fig. 2) of a hollow tube member (16) of the valve system (13) for influencing the degree of heat exchange between the first air flow and the second air flow.

2. Heat exchanger according to claim 1, wherein the at least one bypass flow-through opening is position adjustable along a longitudinal axis (12) of the bypass tube for influencing the degree of heat exchange between the first air flow and the second air flow.

3. Heat exchanger according to claim 1 or 2, wherein the at least one bypass flow-through opening is size adjustable for influencing the degree of heat exchange between the first air flow and the second air flow.

4. Heat exchanger according to a preceding claim, wherein the bypass tube comprises a number of bypass flow-through openings (10, 11) spaced along the longitudinal axis (12) of the bypass tube.

5. Heat exchanger according to a preceding claim, wherein the bypass tube comprises an open end (14) for passing the second air flow, and wherein the at least one bypass flow-through opening is arranged between the interspace flow-through opening and the open end of the bypass tube.

6. Heat exchanger according to a preceding claim, wherein the interspace is closed off at both opposite sides of the heat exchanger such that the entire second air flow flows between the at least one bypass flow-through opening and the interspace flow-through opening.

7. Heat exchanger according to a preceding claim, wherein the interspace flow-through opening is arranged at the outer periphery of the heat exchanger, preferably arranged in the outer shell.

8. Heat exchanger according to a preceding claim, wherein the bypass tube is arranged within the outer shell, preferably centrally arranged within the outer shell.

9. Heat exchanger according to a preceding claim, comprising a mounting member for arranging at least one tube (5) of the number of tubes within the outer shell (6), wherein the at least one tube is in press-fit connection with the mounting member to ensure an airtight coupling between the mounting member and the at least one tube.

10. Heat exchanger according to claim 9, wherein the at least one tube is coupled to the mounting member through a sealing means.

11. Heat exchanger according to a preceding claim, wherein
- the first air flow is a fresh air flow (2) from outside into the interior,
- the second air flow is an outgoing flow (3) from the interior to the outside,
- the interspace flow-through opening is an interspace inlet for receiving the outgoing flow from the interior into the interspace such that the interspace carries the outgoing flow from the interior to the outside along the number of tubes such that heat is exchanged between the fresh air flow through the number of tubes and the outgoing flow in the interspace, and
- the at least one bypass flow-through opening being at least one bypass inlet in fluid connection with the interspace, the bypass tube being adjustable to position selectively allow flow from the interspace through the at least one bypass inlet to the outside.

12. Forced ventilation system comprising a heat exchanger according to a preceding claim.

13. Forced ventilation system according to claim 12, comprising an axial fan member for generating the fresh air flow (2) from outside into the interior and the outgoing flow (3) from the interior to the outside.

14. Use of a heat exchanger according to a preceding claim in a forced ventilation system.

## Patentansprüche

1. Wärmetauscher für ein Zwangsbelüftungs-System (1) zum Einleiten von Frischluft von außen in einen Innenraum, wobei der Wärmetauscher ein Wärmetauscher (4) vom Typ mit Mantel und Röhren zum Austauschen von Wärme zwischen einem ersten Luftstrom und einem zweiten Luftstrom ist und der Wärmetauscher umfasst:
- eine Anzahl von Röhren (5) zum Leiten des ersten Luftstroms,
- einen äußeren Mantel (6), der zum Leiten des zweiten Luftstroms eingerichtet ist, wobei der äußere Mantel die Anzahl von Röhren umschließt und einen Zwischenraum (7) innerhalb des äußeren Mantels und außerhalb der Anzahl von Röhren bildet,
- eine Zwischenraum-Strömungsöffnung (8) für den zweiten Luftstrom, wobei der Zwischenraum den zweiten Luftstrom an der Anzahl von Röhren entlang führt, so dass Wärme zwischen dem ersten Strom durch die Anzahl von Röhren und dem zweiten Luftstrom in dem Zwischenraum ausgetauscht wird, **gekennzeichnet durch**
- eine Umgehungs-Röhre (9), die wenigstens eine Umgehungs-Strömungsöffnung (10, 11) aufweist, die in Fluid-Verbindung mit dem Zwischenraum steht, wobei die Umgehungs-Röhre so eingestellt werden kann, das je nach Position selektiv Strömung durch die wenigstens eine Umgehungs-Strömungsöffnung ermöglicht wird, und
- ein Ventil-System (13), das funktional mit der wenigstens einen Umgehungs-Strömungsöffnung (10, 11) verbunden ist, um die wenigstens eine Umgehungs-Strömungsöffnung in Abhängigkeit von der Position (Fig. 1, Fig. 2) eines hohlen Röhren-Elementes (60) des Ventil-Systems (13) wenigstens teilweise zu öffnen oder zu schließen und so den Grad an Wärmeaustausch zwischen dem ersten Luftstrom und dem zweiten Luftstrom zu beeinflussen.

2. Wärmetauscher nach Anspruch 1, wobei die Position der wenigstens einen Umgehungs-Strömungsöffnung entlang der Längsachse (12) der Umgehungs-Röhre eingestellt werden kann, um so den Grad an Wärmeaustausch zwischen dem ersten Luftstrom und dem zweiten Luftstrom zu beeinflussen.

3. Wärmetauscher nach Anspruch 1 oder 2, wobei die Größe der wenigstens einen Umgehungs-Strömungsöffnung eingestellt werden kann, um so den Grad an Wärmeaustausch zwischen dem ersten Luftstrom und dem zweiten Luftstrom zu beeinflussen.

4. Wärmetauscher nach einem vorangehenden Anspruch, wobei die Umgehungs-Röhre eine Anzahl an Umgehungs-Röhren-Strömungsöffnungen (10, 11) umfasst, die entlang der Längsachse (12) der Umgehungs-Röhre beabstandet sind.

5. Wärmetauscher nach einem vorangehenden Anspruch, wobei die Umgehungs-Röhre ein offenes Ende (14) zum Durchlassen des zweiten Luftstroms umfasst und die wenigstens eine Umgehungs-Strömungsöffnung zwischen der Zwischenraum-Strömungsöffnung und dem offenen Ende der Umgehungs-Röhre angeordnet ist.

6. Wärmetauscher nach einem vorangehenden Anspruch, wobei der Zwischenraum an beiden einander gegenüberliegenden Seiten des Wärmetauschers verschlossen ist, so dass der gesamte zweite Luftstrom zwischen der wenigstens einen Umgehungs-Strömungsöffnung und der Zwischenraum-Strömungsöffnung strömt.

7. Wärmetauscher nach einem vorangehenden Anspruch, wobei die Zwischenraum-Strömungsöffnung an dem Außenumfang des Wärmetauschers angeordnet ist, vorzugsweise in dem äußeren Mantel angeordnet ist.

8. Wärmetauscher nach einem vorangehenden Anspruch, wobei die Umgehungs-Röhre im Inneren des äußeren Mantels angeordnet ist, vorzugsweise mittig im Inneren des äußeren Mantels angeordnet ist.

9. Wärmetauscher nach einem vorangehenden Anspruch, der ein Anbringungs-Element umfasst, mit dem die wenigstens eine Röhre (5) der Anzahl von Röhren im Inneren des äußeren Mantels (6) angeordnet wird, wobei die wenigstens eine Röhre in Pressverbindung mit dem Anbringungs-Element ist, um eine luftdichte Kopplung zwischen dem Anbringungs-Element und der wenigstens einen Röhre zu gewährleisten.

10. Wärmetauscher nach Anspruch 9, wobei die wenigstens eine Röhre über eine Dichtungseinrichtung mit dem Anbringungs-Element gekoppelt ist.

11. Wärmetauscher nach einem vorangehenden Anspruch, wobei
- der erste Luftstrom ein Frischluft-Strom (2) von außen in den Innenraum hinein ist,
- der zweite Luftstrom ein aus dem Innenraum nach außen austretender Luftstrom (3) ist,
- die Zwischenraum-Strömungsöffnung ein Zwischenraum-Einlass ist, über den der austretende Strom aus dem Innenraum in dem Zwischenraum so aufgenommen wird, dass der Zwischenraum den austretenden Strom aus dem Innenraum entlang der Anzahl von Röhren nach außen führt, so dass Wärme zwischen dem Frischluft-Strom durch die Anzahl von Röhren und dem austretenden Strom in dem Zwischenraum ausgetauscht wird, und
- die wenigstens eine Umgehungs-Strömungsöffnung wenigstens ein Umgehungs-Einlass in Fluid-Verbindung mit dem Zwischenraum ist, wobei die Umgehungs-Röhre so eingestellt werden kann, das je nach Position selektiv Strömung aus dem Zwischenraum durch den wenigstens einen Umgehungs-Einlass nach außen ermöglicht wird.

12. Zwangsbelüftungs-System, das einen Wärmetauscher nach einem vorangehenden Anspruch umfasst.

13. Zwangsbelüftungs-System nach Anspruch 12, das ein Axiallüfter-Element zum Erzeugen des Frischluft-Stroms (2) von außen in den Innenraum hinein sowie des austretenden Stroms (3) aus dem Innenraum nach außen umfasst.

14. Einsatz eines Wärmetauschers nach einem vorangehenden Anspruch in einem Zwangsbelüftungs-System.

## Revendications

1. Échangeur de chaleur destiné à un système de ventilation forcée (1) pour introduire de l'air frais depuis l'extérieur dans un intérieur, l'échangeur de chaleur étant un échangeur de chaleur du type à coque et tube (4) pour échanger de la chaleur entre un premier flux d'air et un deuxième flux d'air, l'échangeur de chaleur comprenant :
- un certain nombre de tubes (5) destiné à canaliser le premier flux d'air,
- une coque extérieure (6) configurée pour canaliser le deuxième flux d'air, la coque extérieure enfermant le nombre de tubes et définissant un espace intermédiaire (7) à l'intérieur de ladite coque extérieur et à l'extérieur du nombre de tubes,
- une ouverture de passage de flux d'espace intermédiaire (8) destiné au deuxième flux d'air de sorte que l'espace intermédiaire achemine le deuxième flux d'air le long du nombre de tubes de sorte que de la chaleur soit échangée entre le premier flux passant à travers le nombre de tubes et le deuxième flux d'air dans l'espace intermédiaire, **caractérisé par**
- un tube de dérivation (9) comportant au moins une ouverture de passage de flux de dérivation (10, 11) relié fluidiquement à l'espace intermédiaire, le tube de dérivation étant ajustable de manière à permettre, selon la position, un flux à travers ladite au moins une ouverture de passage de flux de dérivation, et
- un système de vannes (13) accouplé fonctionnellement à ladite au moins une ouverture de passage de flux de dérivation (10, 11) de manière à ouvrir ou fermer au moins partiellement ladite au moins une ouverture de passage de flux de dérivation en fonction de la position (figure 1, figure 2) d'un élément de tube creux (16) du système de vannes (13) de manière à influer sur le degré d'échange de chaleur entre le premier flux d'air et le deuxième flux d'air.

2. Échangeur de chaleur selon la revendication 1, dans lequel ladite au moins une ouverture de passage de flux de dérivation est ajustable en position le long d'un axe longitudinal (12) du tube de dérivation de manière à influer sur le degré d'échange de chaleur entre le premier flux d'air et le deuxième flux d'air.

3. Échangeur de chaleur selon la revendication 1 ou 2, dans lequel ladite au moins une ouverture de passage de flux de dérivation est de taille ajustable de manière à influer sur le degré d'échange de chaleur entre le premier flux d'air et le deuxième flux d'air.

4. Échangeur de chaleur selon l'une des revendications précédentes, dans lequel le tube de dérivation comprend un certain nombre d'ouvertures de passage de flux de dérivation (10, 11) espacées le long de l'axe longitudinal (12) du tube de dérivation.

5. Échangeur de chaleur selon l'une des revendications précédentes, dans lequel le tube de dérivation comprend une extrémité ouverte (14) destinée à laisser passer le deuxième flux d'air, et dans lequel ladite au moins une ouverture de passage de flux de dérivation est disposée entre l'ouverture de passage de flux d'espace intermédiaire et l'extrémité ouverte du tube de dérivation.

6. Échangeur de chaleur selon une revendication précédente, dans lequel l'espace intermédiaire est fermé des deux côtés opposés de l'échangeur de chaleur de sorte que le deuxième flux d'air s'écoule entièrement entre ladite au moins une ouverture de passage de flux de dérivation et l'ouverture de passage de flux d'espace intermédiaire.

7. Échangeur de chaleur selon une revendication précédente, dans lequel l'ouverture de passage de flux d'espace intermédiaire est disposée à la périphérie extérieure de l'échangeur de chaleur, de préférence disposée dans la coque extérieure.

8. Échangeur de chaleur selon une revendication précédente, dans lequel le tube de dérivation est disposé à l'intérieur de la coque extérieure, de préférence disposé au centre dans la coque extérieure.

9. Échangeur de chaleur selon une revendication précédente, comprenant un élément de montage destiné à disposer au moins un tube (5) du nombre de tubes à l'intérieur de la coque extérieure (6), dans lequel ledit au moins un tube est relié à ajustement serré à l'élément de montage de manière à assurer un accouplement étanche à l'air entre l'élément de montage et ledit au moins un tube.

10. Échangeur de chaleur selon la revendication 9, dans lequel ledit au moins un tube est accouplé à l'élément de montage par le biais d'un moyen d'étanchéité.

11. Échangeur de chaleur selon une revendication précédente, dans lequel :
- le premier flux d'air est un flux d'air frais (2) depuis l'extérieur vers l'intérieur,
- le deuxième flux d'air est un flux sortant (3) depuis l'intérieur vers l'extérieur,
- l'ouverture de passage de flux d'espace intermédiaire est une entrée d'espace intermédiaire destinée à recevoir le flux sortant depuis l'intérieur dans l'espace intermédiaire de sorte que l'espace intermédiaire achemine le flux sortant depuis l'intérieur vers l'extérieur le long du nombre de tubes de sorte que de la chaleur soit échangée entre le flux d'air frais passant à travers le nombre de tubes et le flux sortant dans l'espace intermédiaire, et
- ladite au moins une ouverture de passage de flux de dérivation est au moins une entrée de dérivation reliée fluidiquement à l'espace intermédiaire, le tube de dérivation étant ajustable de manière à permettre un flux, selon la position, depuis l'espace intermédiaire vers l'extérieur via ladite au moins une entrée de dérivation.

12. Système de ventilation forcée comprenant un échangeur de chaleur selon une revendication précédente.

13. Système de ventilation forcée selon la revendication 12, comprenant un élément de ventilateur axial destiné à générer le flux d'air frais (2) depuis l'extérieur vers l'intérieur et le flux sortant (3) depuis l'intérieur vers l'extérieur.

14. Utilisation d'un échangeur de chaleur selon une revendication précédente, dans un système de ventilation forcée.
